# EUROPÄISCHE PATENTSCHRIFT

(11) **EP 3 530 869 B1**
(45) Veröffentlichungstag und Bekanntmachung des Hinweises auf die Patenterteilung: **15.04.2020**
(21) Anmeldenummer: 18158982.1
(22) Anmeldetag: 27.02.2018
(51) Int. Cl.: E06B 9/88, F16P 3/14, G01V 8/20, E05F 15/73, E06B 9/68

(54) **LICHTGITTER MIT DISTANZINFORMATION UND DEREN VERWENDUNG**
LIGHT GRID WITH DISTANCE INFORMATION AND USE THEREOF
BARRIERE LUMINEUSE COMPORTANT DES INFORMATIONS DE DISTANCE ET SON UTILISATION

(43) Veröffentlichungstag der Anmeldung: 28.08.2019
(73) Patentinhaber: Cedes AG, 7302 Landquart (CH)
(72) Erfinder: Zanolari, Loris, 7206 Igis (CH)
(74) Vertreter: Otten, Roth, Dobler & Partner mbB Patentanwälte

(56) Entgegenhaltungen:
- EP-A1- 2 506 034
- EP-A1- 2 845 985
- EP-B1- 1 841 942

## Beschreibung

Die Erfindung betrifft ein Lichtgitter mit einer Senderleiste mit Senderelementen und einer Empfangsleiste mit Empfangselementen zur Ausbildung eines Gitters aus Lichtschranken.

Aus dem Stand der Technik sind Lichtgitter der genannten Gattung bekannt. Die Patente EP 1 841 942 B1, EP 2 229 496 B1, EP 2 574 718 B1, EP2845985 A1, und EP 2 586 959 B2 beschreiben ein solches gattungsgemässes Lichtgitter. Insbesondere ist als Stand der Technik das Produkt GridScan/Mini des Anmelders CEDES AG bekannt. Dieses Lichtgitter ist ein SIL 2 zertifizierter Sicherheitsvorhang zur Anwendung insbesondere an Roll- oder Sektionaltoren welcher die Unterbrüche seiner Lichtstrahlen so interpretiert, dass ein Gefahrenstatus des Tores erkannt wird. Diesen Status übermittelt das Lichtgitter entweder als Normalfall oder Sicherheitsfall mit einem FSS genannten sicheren Signal an das Tor. Sicherheitsfall wird eine drohende Gefährdung genannt. Diese ist gegeben, wenn die Torkante des Torblatts des Tores sich einem im Lichtgitter erkannten Objekt zu nah annähert. Das übermittelte Signal ist im Normalfall ein mit 1 kHz Frequenz moduliertes Signal und im Sicherheitsfall das LOW oder GND-Signal. Dadurch ist das Signal sicher, da bei Ausfall des Signals automatisch der Sicherheitsfall übermittelt wird. Typische Steuereinrichtungen von Toren sind dazu ausgelegt das mit einer Frequenz modulierte Signal in einem zulässigen Frequenzbereich zwischen 0,2 kHz und 2 kHz als Signal zu erwarten und als Normalfall zu interpretieren.

Es ist Aufgabe der Erfindung, ein verbessertes Lichtgitter bereit zu stellen.

Diese Aufgabe wird, ausgehend von einem Lichtgitter der eingangs genannten Art, durch ein Lichtgitter nach Anspruch 1, ein Tor nach Anspruch 8 und die Verwendung eines Lichtgitters nach Anspruch 9 gelöst. Vorteilhafte Ausgestaltungen sind in den weiteren abhängigen Ansprüchen angegeben.

Das erfindungsgemäße Lichtgitter ist ein Lichtgitter zur Absicherung der Torkante eines motorisch angetriebenen Tores gegen Kollision mit einem Objekt. Das Lichtgitter weist eine Senderleiste und eine Empfängerleiste mit Sender- und Empfängerelementen zur Detektion eines Objekts in der Ebene des Torblatts durch Unterbruch des Empfangs von einzelnen Empfängerelementen auf. Das Lichtgitter weist zudem eine Auswerteeinrichtung auf, die dazu ausgebildet ist, aufgrund der Detektion einen Status für das Tor zwischen Normalfall oder Sicherheitsfall zu unterscheiden, und den Sicherheitsfall zu ermitteln, wenn zwischen Torkante und Objekt eine kritische Anzahl von nicht unterbrochenen Empfangselemente unterschritten ist und den Normalfall zu ermitteln, wenn zwischen Torkante und Objekt eine kritische Anzahl von nicht unterbrochenen Empfangselemente nicht unterschritten ist. Das Lichtgitter weist zudem eine Kommunikationseinrichtung auf die dazu ausgebildet ist, ein Signal für den Status insbesondere an eine Steuereinrichtung eines Tores auszugeben welches im Sicherheitsfall ein LOW Signal oder ein nicht frequenzmoduliertes Signal oder ein GND-Signal ist und im Normalfall ein mit einer Frequenz moduliertes Signal ist. Die Auswerteeinrichtung ist zudem dazu ausgebildet, einen Abstandswert zu ermitteln welcher der Anzahl der nicht unterbrochenen Empfangselemente unterhalb der Torkante bis zu ersten unterbrochenen Element entspricht. Die Kommunikationseinrichtung ist zudem dazu ausgebildet, die Frequenz des mit einer Frequenz modulierten Signals in Abhängigkeit vom Abstandswert zu verändern.

LOW bedeutet niedriger Signalpegel, insbesondere deutlich niedrigere (< 50%, insbesondere <10%) Spannung oder Strom in Bezug auf das frequenzmodulierte Signal. GND bedeutet Ground oder Masse oder Bezugspotential insbesondere für das frequenzmodulierte Signal.

Das erfindungsgemässe Lichtgitter kann den Vorteil ausbilden, dass neben der Information zum Status auch noch ein Abstandswert für den Abstand zwischen Torkante und Objekt übermittelt wird.

Vorzugsweise ist die Kommunikationseinrichtung dazu ausgebildet, den Abstandswert mit dem gleichen Signal wie für den Status des Normalfalls zu übermitteln. Gleiches Signal bedeutet hier die gleiche Signalart, d.h. durch die Art eines frequenzmodulierten Signals. Dies kann den Vorteil ausbilden, dass kein weiteres Signal definiert werden muss.

Insbesondere kann die Kommunikationseinrichtung dazu ausgebildet sein, das Signal für den Sicherheitsfall, für den Normalfall und den Abstandswert über eine einzige Signalleitung auszugeben. Dies kann den Vorteil ausbilden, dass keine weitere Signalleitung implementiert werden muss.

Insbesondere ist die Kommunikationseinrichtung dazu ausgebildet, die Frequenz des frequenzmodulierten Signals in Abhängigkeit vom Abstandswert innerhalb eines zulässigen Frequenzbereichs zu verändern den die Steuereinrichtung des Tores für das frequenzmodulierte Signal für den Normalfall erwartet. Dieser zulässige Frequenzbereich kann insbesondere den Bereich von 0.2 kHz bis 2 kHz umfassen. Insbesondere kann der Abstandswert mit dem Signal für den Normalfall übermittelt werden. Insbesondere kann der Abstandswert als Signal für den Normalfall übermittelt werden. Dies kann den Vorteil ausbilden, dass das Lichtgitter auch für Tore mit Steuereinrichtungen Verwendung finden kann, die keinen Abstandswert erwarten.

Vorzugsweise ist die Kommunikationseinrichtung dazu ausgebildet, die Frequenz in Abhängigkeit vom Abstandabstandswert proportional zu verändern. Dies kann den Vorteil ausbilden, dass die Information über den Abstand einfach plausibel kodiert ist. Dies kann die Kosten reduzieren und die Funktionssicherheit erhöhen.

Vorzugsweise ist die Kommunikationseinrichtung dazu ausgebildet, die Frequenz in Abhängigkeit vom Abstandswert stufenweise zu verändern. Dies kann den Vorteil ausbilden, dass die Werteraum für den Abstand klein gehalten werden kann. Dies kann die Kosten reduzieren und die Funktionssicherheit erhöhen.

Vorzugsweise ist die Kommunikationseinrichtung dazu ausgebildet, die Frequenz in Abhängigkeit vom Abstandswert in 2 oder 3 Stufen zu verändern. Dies kann den Vorteil ausbilden, dass nur wenige bestimmte Bereiche des Abstandes unterschieden werden die von besonderem Interesse sind. Dies kann die Kosten reduzieren und die Funktionssicherheit erhöhen.

Vorzugsweise ist die Kommunikationseinrichtung dazu ausgebildet, die Frequenz in Abhängigkeit vom Abstandswert in mindestens 2 Stufen zu verändern von denen mindestens eine Stufe der Anfahrt oder dem Abbremsen des Torblatts des Tores entspricht. Dies kann den Vorteil ausbilden, dass die besonders wichtigen Bereiche des Abstandes, die die Anfahrt oder den Bremsvorgang repräsentieren besonders berücksichtigt sind und so die Steuereinrichtung des Tores aufgrund des jeweils typischen Abstandswertes eine sanfte Geschwindigkeitsänderung einleiten kann. Dies kann den Vorteil ausbilden, dass das Tor geschont wird, Stromspitzen vermieden, die Standzeit des Tores erhöht und die Wartungskosten gesenkt werden.

Vorzugsweise ist die Kommunikationseinrichtung dazu ausgebildet, die Frequenz in Abhängigkeit vom Abstandswert mit abnehmendem Abstand und/oder Abstandswert zu erhöhen. Dies führt dazu, dass bei zunehmender Annäherung der Torkante an das Objekt eine höhere Frequenz ausgegeben wird. Eine höhere Frequenz kann schnellere Schaltzeiten ermöglichen. Somit kann dies den Vorteil ausbilden, dass die Steuereinrichtung des Tores bei zunehmender Gefahr schneller reagieren kann. Dies kann den Vorteil ausbilden, die Sicherheit des Tores zu erhöhen.

Das erfindungsgemässe Tor ist ein Tor mit einem Torblatt mit einer Torkante und mit einem vorgenannten erfindungsgemässen Lichtgitter. Das Tor weist eine Steuereinrichtung zur Steuerung und Absicherung des Antriebs des Tores auf, um in einem Sicherheitsfall den Stopp oder die Reversion eines sich schliessenden Torblatts einzuleiten. Die Steuereinrichtung ist dazu ausgebildet, vom Lichtgitter ein Signal für den Status des Tores entweder als Normalfall oder als Sicherheitsfall zu übernehmen und ein mit einer Frequenz moduliertes Signal als Normalfall zu interpretieren und entsprechend ein LOW Signal oder ein nicht frequenzmoduliertes Signal oder das GND-Signal als Sicherheitsfall zu interpretieren. Zudem ist die Steuereinrichtung dazu ausgebildet, eine Veränderung der Frequenz des Signals für den Normalfall als Abstandswert zu interpretieren, um insbesondere die Geschwindigkeit des Torblatts in Abhängigkeit von diesem Abstandswert zu verändern. Das erfindungsgemässe Tor kann alle vorgenannten Vorteile entsprechend ausbilden.

Die erfindungsgemässe Verwendung ist die Verwendung des vorgenannten erfindungsgemässen Lichtgitters für ein Tor mit einer Steuereinrichtung zur Steuerung des Antriebs des Tores welche dazu ausgebildet ist, vom Lichtgitter ein Signal für den Status des Tores zu übernehmen, wobei das Signal für den Normalfall mit einer Frequenz moduliert ist und für den Sicherheitsfall das LOW-Signal oder ein nicht frequenzmoduliertes Signal oder das GND-Signal ist.

Es sei angemerkt, dass das Tor der erfindungsgemässen Verwendung des vorgenannten erfindungsgemässen Lichtgitters nicht notwendigerweise die Veränderung der Frequenz des frequenzmodulierten Signals für den Normalfall als Abstandswert interpretiert. Das Tor nimmt vom erfindungsgemässen Lichtgitter nur die Information über den Status an, die es auch von einem Lichtgitter des Standes der Technik aufnehmen würde. Dies kann den Vorteil ausbilden, dass das erfindungsgemässe Lichtgitter auch bei und mit einem Tor nach dem Stand der Technik Verwendung finden kann. Dies kann den Vorteil ausbilden, dass das erfindungsgemässe Lichtgitter bei einer grösseren Vielzahl von Toren Verwendung finden kann.

Weitere Merkmale der Erfindung sind in den Zeichnungen angegeben.

Die jeweils genannten Vorteile können sich auch für Merkmalskombinationen realisieren in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: Tor mit Lichtgitter
- Fig. 2: Signal für Sicherheitsfall und Normalfall nach Stand der Technik
- Fig. 3: Signal proportionalen Abstandswert
- Fig. 4: Signal für gestuften Abstandswert

### Detaillierte Beschreibung der Zeichnungen:

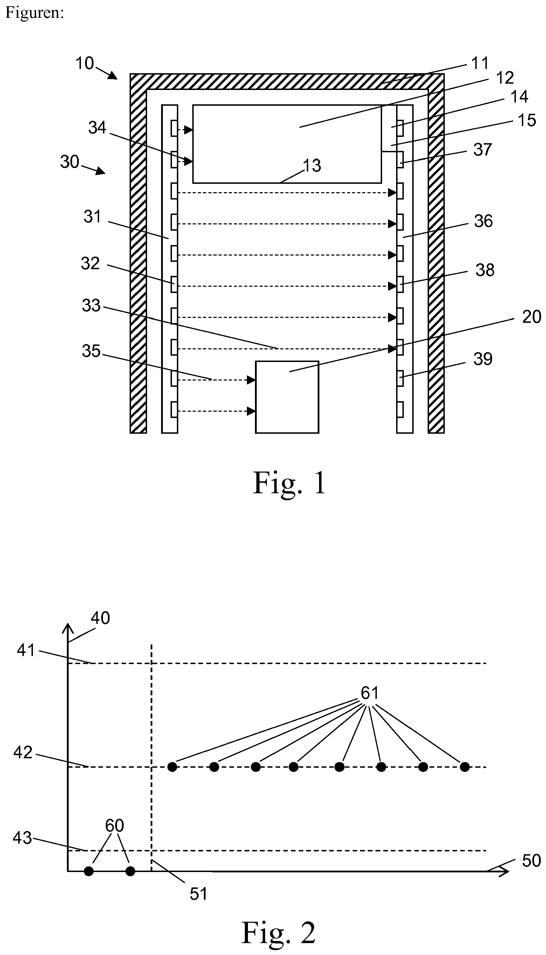

Fig. 1 zeigt ein erfindungsgemässes Tor mit einem erfindungsgemässen Lichtgitter. Das Tor 10 ist ein Rolltor oder ein Sektionaltor oder ein sonstiges Tor mit einem vertikal verschieblich beweglichen Torblatt 12. Das Tor 10 befindet sich in einer nicht dargestellten Wand mit einer Toröffnung 11 und umfasst das Torblatt 12 mit der Torkante 13. Die Torkante ist der Teil des Torblatts welcher der schliessenden Bewegung des Tores vorangeht und zuerst auf ein Objekt auftreffen würde. Das Tor umfasst eine Torsteuerung 14 und einen Torantrieb 15. Die Torsteuerung ist die Steuereinrichtung 14 des Tores, welche den Torantrieb und damit die Bewegung des Torblatts steuert. Die von der bewegten Torkante beschriebene Ebene ist die Torebene.

Das Lichtgitter 30 ist in der Torebene angeordnet. Das Lichtgitter 30 weist eine der Senderleiste 31 und eine Empfängerleiste 36 sowie eine hier nicht dargestellten Auswerteeinrichtung und eine Kommunikationseinrichtung auf. Die Senderleiste und die Empfängerleiste ist in der Torebene seitlich vom geschlossen gedachten Torblatt angeordnet. Die Senderleiste weist Senderelemente 32 und die Empfängerleiste weist Empfängerelemente 37, 38, 39 auf die einander in der Höhe zugeordnet sind und waagrechte Lichtschranken mit Lichtstahlen 33, 34, 35 ausbilden.

Zwischen der Senderleiste und der Empfängerleiste befindet sich das Torblatt 12 und ein Objekt 20, welche die Lichtstrahlen 34, 35 unterbrechen. Die nicht unterbrochenen Lichtstrahlen treffen auf die zugeordneten Empfängerelemente 38. Die Lichtstrahlen 34 welche vom Torblatt unterbrochen sind können nicht zu den oberen Empfängerelementen 37 gelangen. Das Lichtgitter verfügt über eine bekannte Methode, um diejenigen Empfängerelemente 37 auszublenden welche vom Torblatt vom Empfang der Lichtstrahlen 34 ihrer zugeordneten Senderelemente unterbrochen sind. Diese ausgeblendeten Empfängerelemente 37 werden nicht weiter zur Analyse herangezogen.

Zwei Empfängerelemente 39 sind durch das Objekt 20 vom Empfang der Lichtstrahlen 35 ihrer zugeordneten Senderelemente unterbrochen. Zwischen Torkante 13 und Objekt 20 sind sechs Empfängerelemente 38 nicht vom Empfang der Lichtstrahlen ihrer zugeordneten Senderelemente 32 unterbrochen. Zwischen Torkante und Objekt bedeutet für die Anzahl der Empfangselemente von unterhalb der Torkante bis zum ersten nicht unterbrochenen Empfangselement. Dies ist der Abstand vom Lichtgitter messbare Abstand zwischen Torkante und Objekt. Diesem Abstand weist die Auswerteeinrichtung einen Abstandswert zu. Der Abstandswert ist die Anzahl der nicht unterbrochenen Empfangselemente welche sich unterhalb der Torkante bis zum ersten unterbrochenen Empfangselement befinden.

Die Auswerteeinrichtung ist dazu ausgelegt, einen Status für das Tor zu unterscheiden und den Abstandswert zu ermitteln. Der Status kann der Normalfall oder der Sicherheitsfall sein. Die Auswerteeinrichtung ist dazu ausgelegt, den Sicherheitsfall dann festzustellen, wenn zwischen Torkante und Objekt eine kritische Anzahl von nicht unterbrochenen Empfangselemente unterschritten ist. Ansonsten stellt die Auswerteeinrichtung den Normalfall fest. Im Falle des Normalfalles stellt die Auswerteeinrichtung auch den Abstandswert fest.

Falls sich die Torkante mehr als 50 cm über dem Boden befindet entspricht die kritische Anzahl derjenigen Anzahl von nicht unterbrochenen Empfangselementen die mindestens einer Länge von 20 cm entspricht. Falls sich die Torkante weniger oder gleich 50 cm über dem Boden befindet entspricht die kritische Anzahl derjenigen Anzahl von nicht unterbrochenen Empfangselementen die mindestens einer Länge von 5 cm entspricht.

Die Kommunikationseinrichtung ist dazu ausgelegt, den Status und den Abstandswert an die Steuereinrichtung des Tores über eine einzige Signalleitung zu übermitteln. Beim Sicherheitsfall schaltet die Kommunikationseinrichtung die Signalleitung auf LOW oder GND. Beim Normallfall beaufschlagt die Kommunikationseinrichtung die Signalleitung mit einem 3,6 V Signal das mit einer Frequenz moduliertem ist welche mit dem Abstandswert mindestens teilweise unterscheidbar korrespondiert.

Die Steuereinrichtung des Tores nimmt das Signal der Kommunikationseinrichtung auf und steuert den Antrieb des Tores und damit die Bewegung des Torblatts. Im Sicherheitsfall stoppt und reversiert die Steuereinrichtung des Tores die Bewegung eines sich schliessenden Torblatts. Im Normalfall beschleunigt oder bremst die Steuereinrichtung des Tores die Bewegung des Torblatts in Abhängigkeit vom empfangenen Abstandswert.

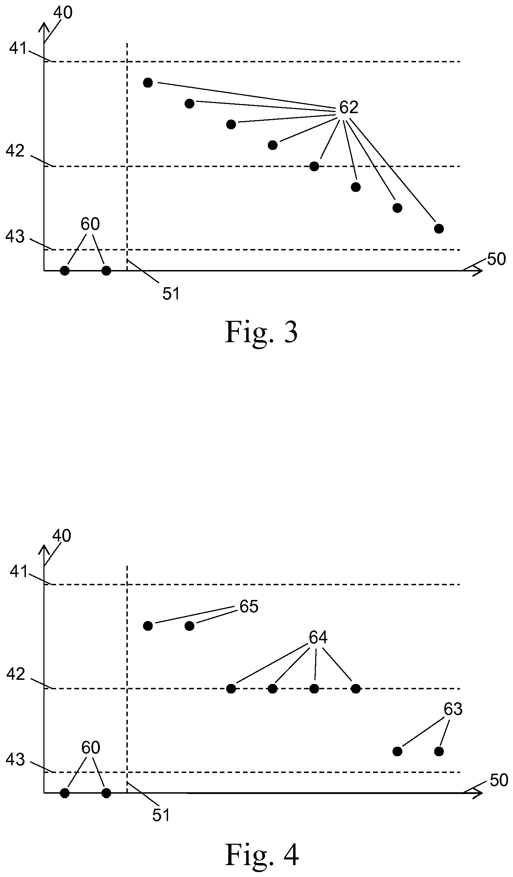

Fig. 2, 3, 4 zeigen Diagramme für den Frequenzwert des Signals der Kommunikationseinrichtung in Abhängigkeit vom Status und im Falle von Figur 3 und 5 auch in Abhängigkeit vom Abstandswert.

Die Diagramme zeigen in der waagrechten Achse 50 die Anzahl der nicht unterbrochenen Empfangselemente von der Torkante bis zum Objekt, d.h. bis zum ersten unterbrochenen Empfangselement. Im Falle der Figuren 3 und 4 entspricht dies dem Abstandswert. Die senkrechte Achse 40 zeigt die Frequenz des Signals der Kommunikationseinrichtung. Die gestrichelte senkrechte Linie entspricht dem kritischen Abstand 51. Dieser entspricht in den Diagrammen drei nicht unterbrochene Empfangselemente. Links vom kritischen Abstand, also hier bei weniger als 3 nicht unterbrochenen Empfangselementen liegt der Sicherheitsfall vor. Rechts vom kritischen Abstand, also hier bei mindestens 3 nicht unterbrochenen Empfangselementen liegt der Normalfall vor. Die untere gestrichelte waagrechte Linie entspricht der minimal zulässigen Frequenz 43 von 0,2 kHz, die mittlere gestrichelte waagrechte Linie entspricht der typischen Frequenz 42 von 1 kHz des Stands der Technik und die obere gestrichelte waagrechte Linie entspricht der maximal zulässigen Frequenz 41 von 2 kHz.

In allen Fällen der Fig 2, 3, 4 ist die Frequenz des Signals 0 kHz und GND, wenn die Anzahl der zwischen Torkante und Objekt nicht unterbrochenen Empfangselemente unter dem kritischen Abstand 51 liegt. Die Steuereinrichtung des Tores interpretiert dies als Sicherheitsfall und stoppt und reversiert eine schliessende Torbewegung.

In allen Fällen der Fig 2, 3, 4 liegt die Frequenz des Signals zwischen der minimal zulässigen Frequenz 43 und der maximal zulässigen Frequenz 41, wenn die Anzahl der zwischen Torkante und Objekt nicht unterbrochenen Empfangselemente über dem kritischen Abstand 51 liegt. Die Steuereinrichtung des Tores interpretiert dies als Normalfall und stoppt das Tor nicht ohne einen anderen Befehl.

Fig. 2 zeigt den Frequenzwert des Signals der Kommunikationseinrichtung in Abhängigkeit des Status gemäss dem Stand der Technik. Im Normalfall bleibt die Frequenz bei einem Wert der typischen Frequenz von 1 kHz unabhängig von der Anzahl der nicht unterbrochenen Empfangselemente 61 zwischen Torkante und Objekt. Es wird keine Abstandsinformation an die Steuereinrichtung des Tores übermittelt.

Fig. 3 zeigt den Frequenzwert des Signals der Kommunikationseinrichtung in Abhängigkeit vom Status und vom Abstandswert mit proportionalem Verlauf des Abstandswertes beim erfindungsgemässen Lichtgitter. Die Frequenzwerte der zwischen Torkante und Objekt nicht unterbrochenen Empfangselemente 62 erhöhen sich mit abnehmendem Abstand der Torkante 13 vom Objekt 20. Somit wird der Steuereinrichtung des Tores zusammen mit dem Statussignal für den Normalfall ein quasi kontinuierlicher proportionaler Abstandswert für die Annäherung der Torkante 13 an das Objekt 20 übermittelt. Die Steuereinrichtung des Tores übernimmt diesen Abstandswert zusammen mit dem Signal für den Normalfall und steuert die Beschleunigung oder Verzögerung der Bewegung des Torblatts in Abhängigkeit vom Abstand bereits bevor die Torkante den kritischen Abstand erreicht.

Fig. 4 zeigt den Frequenzwert des Signals der Kommunikationseinrichtung in Abhängigkeit vom Status und vom Abstandswert mit stufenweise verändertem Verlauf des Abstandswertes beim erfindungsgemässen Lichtgitter. Die Frequenzwerte der zwischen Torkante und Objekt nicht unterbrochenen Empfangselemente 63, 64, 65 erhöhen sich in 3 Stufen mit abnehmendem Abstand der Torkante 13 vom Objekt 20. Somit wird der Steuereinrichtung des Tores zusammen mit dem Statussignal für den Normalfall die Information übermittelt in welchem von 3 Bereichen der Abstand der Torkante vom Objekt liegt.

In einem Nahbereich mit nur noch wenigen nicht unterbrochenen Empfangselementen 65 zwischen Torkante und Objekt wird eine erhöhte Frequenz von etwa 1,8 kHz an die Steuereinrichtung des Tores übermittelt. Die Steuereinrichtung des Tores übernimmt die Information, dass der Nahbereich erreicht ist zusammen mit dem Signal für den Normalfall und verlangsamt die Bewegung des Torblatts bereits im Nahbereich bevor die Torkante den kritischen Abstand erreicht.

In einem Fernbereich mit nur noch vielen nicht unterbrochenen Empfangselementen 63 zwischen Torkante und Objekt wird eine niedrige Frequenz von etwa 0,4 kHz an die Steuereinrichtung des Tores übermittelt. Die Steuereinrichtung des Tores übernimmt die Information, dass der Fernbereich vorliegt zusammen mit dem Signal für den Normalfall und beschleunigt die Bewegung des Torblatts bereits im Fernbereich.

In einem Mittelbereich mit einer Anzahl von unterbrochenen Empfangselementen 65 zwischen Torkante und Objekt zwischen Nahbereich und Fernbereich wird eine mittlere Frequenz von etwa 1,0 kHz an die Steuereinrichtung des Tores übermittelt. Die Steuereinrichtung des Tores übernimmt die Information, dass der Mittelbereich vorliegt zusammen mit dem Signal für den Normalfall und hält die Bewegung des Torblatts konstant.

### Bezugszeichenliste:

- 10: Tor
- 11: Toröffnung
- 12: Torblatt
- 13: Torkante
- 14: Torsteuerung
- 15: Torantrieb

- 20: Objekt

- 30: Lichtgitter
- 31: Senderleiste
- 32: Sendeelement
- 33: Lichtstrahl, nicht unterbrochen
- 34: Lichtstrahl, ausgeblendet
- 35: Lichtstrahl, unterbrochen
- 36: Empfängerleiste
- 37: Empfangselement, ausgeblendet
- 38: Empfangselement mit Empfangssignal
- 39: Empfangselement ohne Empfangssignal

- 40: Frequenzachse des Ausgabesignals
- 41: maximale Frequenz
- 42: typische Frequenz
- 43: minimale Frequenz

- 50: Anzahl der Empfangselemente mit Empfangssignal (Abstand)
- 51: kritischer Abstand (Mindestanzahl Empfangselemente mit Empfangssignal)

- 60: Empfangselemente mit Empfangssignal unter der kritischen Anzahl
- 61: Empfangselemente mit Empfangssignal (konstanter Frequenz)
- 62: Empfangselemente mit Empfangssignal (proportionale Frequenz)
- 63: Empfangselemente mit Empfangssignal (Frequenzstufen, Abfahrt)
- 64: Empfangselemente mit Empfangssignal (Frequenzstufen, Fahrt)
- 65: Empfangselemente mit Empfangssignal (Frequenzstufen, Annäherung)

## Patentansprüche

1. Lichtgitter 30
- zur Absicherung der Torkante 13 eines motorisch angetriebenen Tores 10 gegen Kollision mit einem Objekt 20,
- mit einer Senderleiste 31 und einer Empfängerleiste 36
- mit Senderelementen 32 und Empfängerelementen 37, 38, 39
- zur Detektion eines Objekts 20 in der Ebene des Torblatts 12 durch Unterbruch des Empfangs von einzelnen Empfängerelementen,
- und mit einer Auswerteeinrichtung die dazu ausgebildet ist,
- aufgrund der Detektion einen Status für das Tor zwischen Normalfall oder Sicherheitsfall zu unterscheiden und
- den Sicherheitsfall zu ermitteln, wenn zwischen Torkante und Objekt eine kritische Anzahl von nicht unterbrochenen Empfangselemente unterschritten ist und
- den Normalfall zu ermitteln, wenn der Sicherheitsfall nicht ermittelt ist,
- **dadurch gekennzeichnet, dass** das Lichtgitter zudem eine Kommunikationseinrichtung aufweist, die dazu ausgebildet ist,
- ein Signal für den Status auszugeben welches
- im Sicherheitsfall ein LOW Signal oder ein nicht frequenzmoduliertes Signal oder ein GND-Signal ist und
- im Normalfall ein mit einer Frequenz moduliertes Signal ist, wobei
- die Auswerteeinrichtung dazu ausgebildet ist,
- einen Abstandswert zu ermitteln welcher der Anzahl der nicht unterbrochenen Empfangselemente unterhalb der Torkante bis zu ersten unterbrochenen Element entspricht, und dass
- die Kommunikationseinrichtung dazu ausgebildet ist,
- die Frequenz 40 in Abhängigkeit vom Abstandswert zu verändern.

2. Lichtgitter nach Anspruch 1, **dadurch gekennzeichnet, dass**
- die Kommunikationseinrichtung dazu ausgebildet ist, den Abstandswert mit dem gleichen Signal wie für den Status des Normalfalls zu übermitteln.

3. Lichtgitter nach Anspruch 1 oder 2, **dadurch gekennzeichnet, dass**
- die Kommunikationseinrichtung dazu ausgebildet ist, die Frequenz in Abhängigkeit vom Abstandabstandswert proportional zu verändern.

4. Lichtgitter nach Anspruch 1 oder 2, **dadurch gekennzeichnet, dass**
- die Kommunikationseinrichtung dazu ausgebildet ist, die Frequenz in Abhängigkeit vom Abstandswert stufenweise zu verändern.

5. Lichtgitter nach Anspruch 4, **dadurch gekennzeichnet, dass**
- die Kommunikationseinrichtung dazu ausgebildet ist, die Frequenz in Abhängigkeit vom Abstandswert in 2 oder 3 Stufen zu verändern.

6. Lichtgitter nach Anspruch 3 oder 5, **dadurch gekennzeichnet, dass**
- die Kommunikationseinrichtung dazu ausgebildet ist, die Frequenz in Abhängigkeit vom Abstandswert in mindestens 2 Stufen zu verändern von denen mindestens eine Stufe der Anfahrt oder dem Abbremsen des Torblatts entspricht.

7. Lichtgitter nach einem der Ansprüche 1 bis 6, **dadurch gekennzeichnet, dass**
- die Kommunikationseinrichtung dazu ausgebildet ist, die Frequenz mit abnehmendem Abstandswert zu erhöhen.

8. Tor 10 mit einem Torblatt 12 mit einer Torkante 13
- mit einem Lichtgitter 30 nach einem der vorgenannten Ansprüche
- und mit einer Steuereinrichtung
- zur Steuerung und Absicherung des Antriebs des Tores, um in einem Sicherheitsfall den Stopp oder die Reversion eines sich schliessenden Torblatts einzuleiten,
- die dazu ausgebildet ist, vom Lichtgitter ein Signal für den Status des Tores als Normalfall oder Sicherheitsfall zu übernehmen und
- die ein mit einer Frequenz moduliertes Signal als Normalfall interpretiert
- und die entsprechend ein LOW Signal oder ein nicht frequenzmoduliertes Signal oder das GND-Signal als Sicherheitsfall interpretiert
- und die eine Veränderung der Frequenz als Abstandswert interpretiert,
- um insbesondere die Geschwindigkeit des Torblatts in Abhängigkeit vom Abstandswert zu verändern.

9. Verwendung eines Lichtgitters 30 nach einem der Ansprüche 1-7 - für ein Tor 10 mit einer Steuereinrichtung
- zur Steuerung des Antriebs des Tores
- die dazu ausgebildet ist, vom Lichtgitter ein Signal für den Status des Tores zu übernehmen
- wobei das Signal für den Normalfall mit einer Frequenz moduliert ist
- und für den Sicherheitsfall das LOW-Signal oder ein nicht frequenzmoduliertes Signal oder das GND-Signal ist.

## Claims

1. A light grid 30
- for securing the door edge 13 of a motor-driven door 10 against collision with an object 20,
- having a transmitter bar 31 and a receiver bar 36
- having transmitter elements 32 and receiver elements 37, 38, 39
- for detecting an object 20 in the level of the door leaf 12 by interrupting the reception of individual receiver elements,
- and having an evaluation means designed
- for differentiating a status for the door between a normal case or a security case based on said detection and
- determining the security case if a critical number of uninterrupted receiving elements is undershot between the door edge and the object and
- determining the normal case if the security case has not been determined,
- **characterised in that** the light grid also has a communication means designed
- to output a signal for the status, which is
- a LOW signal or a non-frequency-modulated signal or a GND signal in the security case and
- a signal modulated with a frequency in the normal case, wherein
- the evaluation means is designed
- to determine a distance value which corresponds to the number of uninterrupted receiving elements below the door edge up to the first interrupted element, and **in that**
- the communication means is designed
- to change the frequency 40 depending on the distance value.

2. The light grid according to claim 1, **characterised in that**
- the communication means is designed to transmit the distance value with the same signal as for the status of the normal case.

3. The light grid according to claim 1 or 2, **characterised in that**
- the communication means is designed to change the frequency proportionally depending on the distance value.

4. The light grid according to claim 1 or 2, **characterised in that**
- the communication means is designed to change the frequency in a stepwise manner depending on the distance value.

5. The light grid according to claim 4, **characterised in that**
- the communication means is designed to change the frequency in 2 or 3 steps depending on the distance value.

6. The light grid according to claim 3 or 5, **characterised in that**
- the communication means is designed to change the frequency depending of the distance value in at least 2 steps, at least one step of which corresponds to the approach or the braking of the door leaf.

7. The light grid according to any one of claims 1 to 6, **characterised in that**
- the communication means is designed to increase the frequency with decreasing distance value.

8. A door 10 having a door leaf 12 with a door edge 13
- having a light grid 30 according to any one of the preceding claims
- and having a control means
- for controlling and securing the drive of the door to initiate the stopping or reversion of a closing door leaf in a security case,
- which is designed to accept a signal from the light grid for the status of the door as a normal case or as a security case, and
- which interprets a signal modulated with a frequency as a normal case,
- and which accordingly interprets a LOW signal or a non-frequency-modulated signal or the GND signal as a security case,
- and which interprets a change in frequency as a distance value,
- in particular to change the speed of the door leaf depending on the distance value.

9. A use of a light grid 30 according to any one of claims 1-7
- for a door 10 having a control means
- for controlling the drive of the door,
- which is designed to accept a signal from the light grid for the status of the door,
- wherein the signal is modulated with a frequency for the normal case
- and is the LOW signal or a non-frequency-modulated signal or the GND signal for the security case.

## Revendications

1. Grille lumineuse 30
- permettant de sécuriser un bord de portail 13 d'un portail 10 motorisé contre une collision avec un objet 20,
- comportant une barre émettrice 31 et une barre réceptrice 36,
- comportant des éléments émetteurs 32 et des éléments récepteurs 37, 38, 39
- pour la détection d'un objet 20 dans un plan d'un battant de portail 12 par interruption de la réception des éléments récepteurs individuels,
- et comportant un dispositif d'évaluation conçu
- pour distinguer, sur la base de la détection, un état pour le portail entre un cas normal ou un cas de sécurité et
- pour déterminer le cas de sécurité lorsque, entre le bord de portail et l'objet, un nombre critique d'éléments récepteurs ininterrompus n'est pas atteint et
- pour déterminer le cas normal lorsque le cas de sécurité n'est pas déterminé,
- **caractérisée en ce que** la grille lumineuse comprend en outre un dispositif de communication conçu
- pour émettre un signal pour l'état, lequel,
- dans le cas de sécurité, est un signal BAS ou un signal non modulé en fréquence ou un signal GND et,
- dans le cas normal, est un signal modulé en fréquence, dans laquelle
- le dispositif d'évaluation est conçu
- pour déterminer une valeur de distance, laquelle correspond au nombre d'éléments de réception ininterrompus en dessous du bord de portail jusqu'au premier élément interrompu et que
- le dispositif de communication est conçu
- pour changer la fréquence 40 en fonction de la valeur de distance.

2. Grille lumineuse selon la revendication 1, **caractérisée en ce que**
- le dispositif de communication est conçu pour transmettre la valeur de distance à l'aide du même signal que pour l'état du cas normal.

3. Grille lumineuse selon la revendication 1 ou 2, **caractérisée en ce que**
- le dispositif de communication est conçu pour changer proportionnellement la fréquence en fonction de la valeur de distance.

4. Grille lumineuse selon la revendication 1 ou 2, **caractérisée en ce que**
- le dispositif de communication est conçu pour changer la fréquence par étages en fonction de la valeur de distance.

5. Grille lumineuse selon la revendication 4, **caractérisée en ce que**
- le dispositif de communication est conçu pour changer la fréquence en 2 ou 3 étages en fonction de la valeur de distance.

6. Grille lumineuse selon la revendication 3 ou 5, **caractérisée en ce que**
- le dispositif de communication est conçu pour modifier la fréquence en fonction de la valeur de distance en au moins 2 étages, dont au moins un étage correspond au démarrage ou au freinage du battant de portail.

7. Grille lumineuse selon l'une quelconque des revendications 1 à 6, **caractérisée en ce que**
- le dispositif de communication est conçu pour augmenter la fréquence lors d'une valeur de distance décroissante.

8. Portail 10 comportant un battant de portail 12 comportant un bord de portail 13,
- comportant une grille lumineuse 30 selon une quelconque des revendications précédentes
- et comportant un dispositif de commande
- pour commander et sécuriser l'entraînement du portail pour, dans un cas de sécurité, amorcer l'arrêt ou le retour d'un battant de portail se refermant,
- lequel est conçu pour recevoir un signal de la grille lumineuse pour l'état du portail comme cas normal ou cas de sécurité et
- lequel interprète un signal modulé en fréquence comme cas normal,
- et lequel interprète de manière correspondante un signal BAS ou un signal non modulé en fréquence ou le signal GND comme cas de sécurité,
- et lequel interprète un changement de la fréquence comme valeur de distance,
- en particulier pour modifier la vitesse du battant de portail en fonction de la valeur de distance.

9. Utilisation d'une grille lumineuse 30 selon une quelconque des revendications 1-7
- pour un portail 10 comportant un dispositif de commande
- pour commander l'entraînement du portail,
- lequel est conçu pour recevoir un signal de la grille lumineuse pour l'état du portail,
- dans laquelle le signal pour le cas normal est modulé en fréquence,
- et, pour le cas de sécurité, ledit signal est le signal BAS ou un signal non modulé en fréquence ou le signal GND.
